# EUROPEAN PATENT SPECIFICATION

(11) **EP 4 132 259 B1**
(45) Date of publication and mention of the grant of the patent: **16.07.2025**
(21) Application number: 21715785.8
(22) Date of filing: 23.03.2021
(51) Int. Cl.: A01D 34/00, B25J 5/00

(54) **ADAPTABLE OPERATION FOR A ROBOTIC WORK TOOL, SUCH AS A ROBOTIC LAWN MOWER**
ANPASSBARER BETRIEBSMODUS FÜR ARBEITSGERÄT, WIE EIN MÄHROBOTER
MODE OPERATOIR ADAPTABLE POUR OUTIL DE TRAVAIL, COMME UN ROBOT DE TONTE

(30) Priority: 06.04.2020 SE 2050385
(43) Date of publication of application: 15.02.2023
(73) Proprietor: HUSQVARNA AB, 561 82 Huskvarna (SE)
(72) Inventor: LEIJONBERGER, Susanne, 554 47 JÖNKÖPING (SE)
(86) International application number: PCT/EP2021/057351
(87) International publication number: WO 2021/204525

(56) References cited:
- WO-A1-2015/094052
- WO-A1-2018/174777
- US-A1- 2009 214 324
- US-A1- 2018 311 831
- US-A1- 2019 248 024

## Description

### TECHNICAL FIELD

This application relates to robotic work tools, such as robotic lawn mowers, and in particular to a system and a method for providing a robotic work tool, such as a lawn mower, having an adaptable operation.

### BACKGROUND

Outdoor work, such as gardening, horticultural or light forestry work often require the use of many tools (for example spades and shearers) and more often than not will produce material (for example dirt and cut twigs) that is to be disposed of. As such, a person engaged in such work will have to carry a lot of items. As many persons engaged in for example gardening work may have difficulties with physical movement or efforts, or to remember to bring all equipment, mobile phone, water bottle and such this is indeed a problem.

Automated or robotic tools are becoming increasingly more popular. It has been proposed to reduce manual carrying in a garden environment by utilizing robots.

The patent document published as US2018311831A1 discloses an apparatus and methods for adaptively retooling robots include programmable adapters for detachably connecting at least one robotic peripheral to a robot, providing peripheral information associated with the robotic peripheral, and causing the robot to adaptively reconfigure based on the peripheral information.

The U.S. patent application published as US2019248024A1 discloses an apparatus and method for transporting a plurality of articles. The apparatus includes a wheeled chassis, and a platform disposed on the wheeled chassis. The apparatus also includes a manipulator coupled to the wheeled chassis and operably configured to load a first article of the plurality of articles at a first position on the platform, or unload the first article of the plurality of articles from the first position on the platform. The apparatus further includes at least one actuator operably configured to cause successive relative rotational movements between the manipulator and the platform to provide access to successive rotationally spaced apart positions on the platform for loading or unloading each subsequent article in the plurality of articles. And, the U.S. patent application published as US2009214324A discloses an adaptable handling system featuring a boundary subsystem and one or more robots. Each robot typically includes a chassis, a container lift mechanism moveable with respect to the robot chassis for transporting at least one container, a drive subsystem for maneuvering the chassis, a boundary sensing subsystem, a container detection subsystem, and a controller. The controller is responsive to the boundary sensing subsystem and the container detection subsystem and is configured to control the drive subsystem to follow a boundary once intercepted until a container is detected and turn until another container is detected. The controller then controls the container lift mechanism to place a transported container proximate the second detected container. However, such prior art systems, such as for example a robot carrying a plant for example from one position to another position, are not of help to, for example, a private gardener as the prior systems are designed for industrial use, with structured areas having defined boundaries and requires an investment in a complete robotic system.

Thus, there is a need for an improved manner of providing assistance in for example a garden.

### SUMMARY

As will be disclosed in detail in the detailed description, the inventors have realized that a complete system, such as in the prior art is not necessary, as more and more households have a robotic lawn mower system, and as such are becoming both cheaper and more advanced they are more available to the wide public.

The inventors are therefore proposing after insightful and inventive reasoning to enable a robotic lawn mower to operate in a second mode, where they for example can be arranged to carry equipment.

As is discussed in the below, and in the detail in the detail description, there are many problems of adapting a robotic lawn mower to operate in a second mode, which the inventors have also provided solutions for. The inventors have also realized that the manner of adapting a robotic lawn mower to work in a second mode with a second tool or an attachment, may also be applied to other robotic working tools, such as watering robots, mulching robots, golf ball collecting robots to mention a few examples.

It is therefore an object of the teachings of this application to overcome or at least reduce those problems by providing a robotic working tool system comprising a robotic working tool comprising a work tool, an attachment receiver arranged to receive an attachment and a controller, the controller being configured to receive information regarding an attachment being received, and in response thereto change the operation of the robotic working tool to operate in an attachment operating mode, and to determine an aspect of the attachment and adapt the operation in the attachment operating mode to accommodate for the determined aspect as per the appended claims.

The aspect is an indication of the weight of the attachment.

The robotic working tool comprises an outer shell and an inner hull**,** wherein the attachment receiver is mechanically connected to the outer shell, and wherein the controller is configured to determine the weight of the attachment based on a relative movement between the outer shell and the inner hull.

In one embodiment the robotic working tool further comprises at least one collision detector, and wherein the controller is further configured to adapt the operation in the attachment operating mode to accommodate for the determined aspect by adapting the operation of at least one of the at least one collision detector.

In one embodiment the robotic working tool further comprises at least one lift detector, and wherein the controller is further configured to adapt the operation in the attachment operating mode to accommodate for the determined aspect by adapting the operation of at least one of the at least one lift detector.

In one embodiment the controller is further configured adapt the operation of the robotic working tool to enable a follow-me-mode.

In one embodiment the controller is further configured adapt the operation of the robotic working tool to enable a follow-boundary-mode.

In one embodiment the controller is further configured adapt the operation of the robotic working tool to enable a virtual-map-navigation mode.

In one embodiment the controller is further configured to adapt the operation to accommodate for the determined aspect by adapting the driving of the robotic working tool.

In one embodiment the controller is further configured to receive information regarding a type of attachment and adapt the operation according to the type of attachment.

In one embodiment the type of attachment is a load receiving attachment.

In one embodiment the type of attachment is a second work tool.

In one embodiment the controller is further configured to adapt the operation to accommodate for the type of attachment by adapting the driving of the robotic working tool.

In one embodiment the robotic working tool comprises at least one wheel having a first diameter, and at least one second wheel having a second diameter wherein the second diameter is larger than the first diameter, and wherein the controller is further configured to adapt the driving of the robotic working tool by causing the robotic working tool to travel with the at least one second wheel forwards.

In one embodiment the robotic working tool comprises at least one collision detector, and wherein the controller is further configured to receive information from the at least one collision detector and to execute an operator command associated with the information received from the at least one collision detector.

In one embodiment the controller is further configured to execute the operator command associated with the information received from the at least one collision detector when operating in the attachment operating mode and to execute an evasive navigation action associated with the information received from the at least one collision detector when operating in the working tool operating mode.

In one embodiment the controller is further configured to receive information regarding the attachment being removed, and in response thereto adapt the operation of the robotic working tool to operate in a working tool operating mode.

In one embodiment the attachment receiver is arranged to receive the attachment in addition to the work tool.

In one embodiment the robotic working tool is a robotic lawnmower, and the work tool is a grass cutting device.

It is also an object of the teachings of this application to overcome the problems by providing a method for use in a method for use in a robotic working tool system comprising a robotic working tool, comprising a work tool and an attachment receiver arranged to receive an attachment the method comprising: receiving information regarding an attachment being received, and in response thereto changing the operation of the robotic working tool to operate in an attachment operating mode, and determining an aspect of the attachment and adapting the operation in the attachment operating mode to accommodate for the determined aspect as per the appended claims.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic working tool according to one embodiment of the teachings herein;
Figure 1B shows a schematic view of the components of an example of a robotic working tool according to an example embodiment of the teachings herein;
Figure 2 shows an example of a robotic working tool system being a robotic lawn mower system according to an example embodiment of the teachings herein;
Figure 3A shows a schematic side view of a robotic working tool according to an example embodiment of the teachings herein;
Figure 3B shows a schematic side view of a robotic working tool according to an example embodiment of the teachings herein;
Figure 4 shows an example of a robotic working tool being a robotic lawn mower according to an example embodiment of the teachings herein;
Figure 5 shows a corresponding flowchart for a method according to an example embodiment of the teachings herein;
Figure 6 shows a corresponding flowchart for a method according to an example embodiment of the teachings herein; and
Figure 7 shows an example of a robotic working tool system comprising a device according to an example embodiment of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

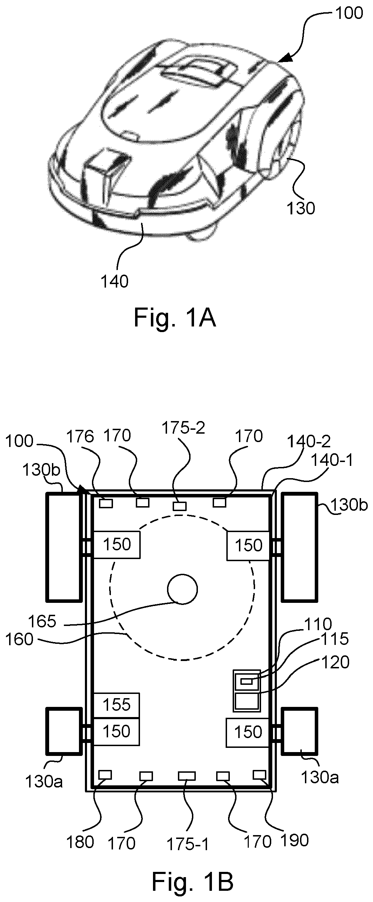

Figure 1A shows a perspective view of a robotic lawn mower 100, having a body 140 and a plurality of wheels 130 (only a front wheel and a rear wheel is shown). The robotic lawn mower 100 may be a multi-chassis type, as in figure 1A, or a mono-chassis type (as in figure 1B). A multi-chassis type comprises more than one body chassis that are movable with respect to one another. A mono-chassis type comprises only one main chassis, comprising a shell and a hull (see figure 1B).

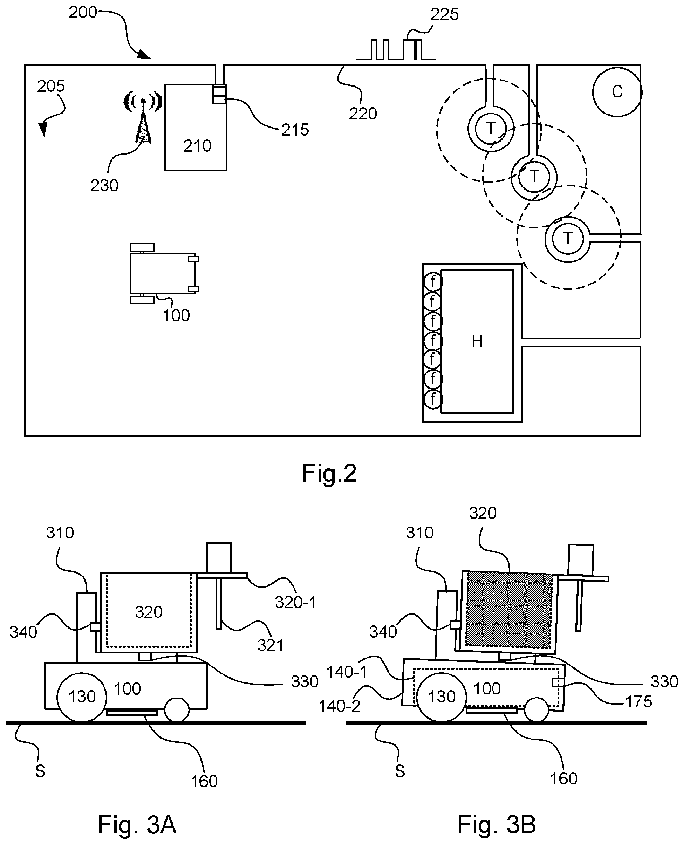

The robotic lawn mower 100 may comprise charging skids for contacting contact plates (not shown in figure 1A) when docking into a charging station (not shown in figure 1A, but referenced 210 in figure 2) for receiving a charging current through, and possibly also for transferring information by means of electrical communication between the charging station and the robotic lawn mower 100.

Figure 1B shows a schematic overview of the robotic working tool here exemplified by a robotic lawn mower 100. In this example embodiment the robotic lawn mower 100 is of a mono-chassis type, having a main chassis 140. The main chassis 140 substantially houses all components of the robotic lawn mower 100. The robotic lawn mower 100 has a plurality of wheels 130. In the exemplary embodiment of figure 1B the robotic lawn mower 100 has four wheels 130, two front wheels 130a and two rear wheels 130b. In the embodiment shown in figure 1B, the front wheels 130a has a smaller diameter than the rear wheels 130b. At least some of the wheels 130 are drivably connected to at least one electric motor 150. It should be noted that even if the description herein is focused on electric motors, combustion engines may alternatively be used, possibly in combination with an electric motor. In the example of figure 1B, each of the wheels 130 is connected to a respective electric motor. This allows for driving the wheels 130 independently of one another which, for example, enables steep turning and rotating around a geometrical centre for the robotic lawn mower 100. It should be noted though that not all wheels need be connected to each a motor, but the robotic lawn mower 100 may be arranged to be navigated in different manners, for example by sharing one or several motors 150. In an embodiment where motors are shared, a gearing system may be used for providing the power to the respective wheels and for rotating the wheels in different directions. In some embodiments, one or several wheels may be uncontrolled and thus simply react to the movement of the robotic lawn mower 100.

The robotic lawn mower 100 also comprises a grass cutting device 160, such as a rotating blade 160 driven by a cutter motor 165. The grass cutting device being an example of a work tool 160 for a robotic lawn mower 100. The robotic lawn mower 100 also has (at least) one battery 155 for providing power to the motor(s) 150 and/or the cutter motor 165.

The robotic lawn mower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawn mower 100 including, but not being limited to, the propulsion of the robotic lawn mower. The controller 110 may be implemented using any suitable, available processor or Programmable Logic Circuit (PLC). The memory 120 may be implemented using any commonly known technology for computer-readable memories such as ROM, RAM, SRAM, DRAM, FLASH, DDR, SDRAM or some other memory technology.

The robotic lawn mower 100 may further be arranged with a wireless communication interface 115 for communicating with other devices, such as a server, a personal computer or smartphone, the charging station, and/or other robotic working tools. Examples of such wireless communication devices are Bluetooth^{®}, WiFi^{®} (IEEE802.11b), Global System Mobile (GSM) and Long Term Evolution (LTE), to name a few.

For enabling the robotic lawn mower 100 to navigate with reference to a boundary wire emitting a magnetic field caused by a control signal transmitted through the boundary wire, the robotic lawn mower 100 is further configured to have at least one magnetic field sensor 170 arranged to detect the magnetic field (not shown) and for detecting the boundary wire and/or for receiving (and possibly also sending) information to/from a signal generator (will be discussed with reference to figure 2). In some embodiments, the sensors 170 may be connected to the controller 110, possibly via filters and an amplifier, and the controller 110 may be configured to process and evaluate any signals received from the sensors 170. The sensor signals are caused by the magnetic field being generated by the control signal being transmitted through the boundary wire. This enables the controller 110 to determine whether the robotic lawn mower 100 is close to or crossing the boundary wire, or inside or outside an area enclosed by the boundary wire.

In an alternative or supplemental embodiment, to enable the robotic lawn mower 100 to operate and navigate according to a virtual map possibly stored in the memory module 120, the robotic lawn mower 100 may further comprise at least one navigation sensor, such as a beacon navigation sensor and/or a satellite navigation sensor 190. The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon. The satellite navigation sensor may be a GPS (Global Positioning System) device or other Global Navigation Satellite System (GNSS) device.

The robotic lawn mower 100 may further optionally comprise one or more sensors for deduced navigation 180. Examples of sensors for deduced reckoning are odometers, accelerometers, gyroscopes, and compasses to mention a few examples. Deduced navigation sensors may enable operation relative a boundary wire and/or enable operation relative a stored map.

In embodiments, where the robotic lawn mower 100 is arranged with a navigation sensor, the magnetic sensors 170 are optional.

The robotic lawn mower 100 may also comprise one or more collision detectors 175. In the example of figure 1B, the robotic lawn mower 100 comprises a front collision detector 175-1, enabling the robotic lawn mower 100 to detect a collision while moving in a forwards direction, i.e. a forwards collision, and a rear collision detector 175-2, enabling the robotic lawn mower 100 to detect a collision while moving in a reverse direction, i.e. a reverse collision. In one embodiment, the collision detector is arranged to operate by sensing a relative movement between an outer shell 140-2 or other body part of the robotic lawn mower, and an inner hull 140-1 or other body part of the robotic lawn mower. The collision is configured to detect a relative movement, and depending on the relative movement (such as direction, amplitude and/or force) of the detected relative movement, determine if a collision (front, back or side) was detected or possibly that another event was detected, and based on the determination, the robotic lawn mower 100 is configured to take appropriate action. An example of an appropriate action for a collision event is for example to turn away and move away from the position where the collision was detected. The collision detector 175 may, in one embodiment, be arranged to also operate as a lift detector. An upwards or downwards relative movement may be indicative of the robotic lawn mower 100 being lifted. Any accelerometer or gyroscope (as part of deduced reckoning means that will be discussed below) may be utilized as lift detectors. Alternatively, the robotic lawn mower 100 comprises specific lift detectors 176. An example of an appropriate action for a lift event is for example to disengage or stop the grass cutting device 160 and to stop the wheels 130.

Figure 2 shows a schematic view of a robotic lawn mower system 200 in one embodiment. The schematic view is not to scale. The robotic lawn mower system 200 comprises a robotic lawn mower 100 as in figures 1A and 1B.

The robotic lawn mower system 200 may also comprise charging station 210 which in some embodiments is arranged with a signal generator 215 and a boundary wire 220.

The signal generator 215 is arranged to generate a control signal 225 to be transmitted through the boundary wire 220. The boundary wire 220 is arranged to enclose a work area 205, in which the robotic lawn mower 100 is supposed to serve. The control signal 225 transmitted through the boundary wire 220 causes a magnetic field (not shown) to be emitted. In one embodiment the control signal 225 is a sinusoid periodic current signal. In one embodiment the control signal 225 is a pulsed current signal comprising a periodic train of pulses. In one embodiment the control signal 225 is a coded signal, such as a CDMA signal.

As an electrical signal is transmitted through a wire, such as the control signal 225 being transmitted through the boundary wire 220, a magnetic field is generated. The magnetic field may be detected using field sensors, such as Hall sensors. A sensor - in its simplest form - is a coil surrounding a conductive core, such as a ferrite core. The amplitude of the sensed magnetic field is proportional to the derivate of the control signal. A large variation (fast and/or of great magnitude) results in a high amplitude for the sensed magnetic field. The variations are sensed and compared to a reference signal or pattern of variations in order to identify and thereby reliably sense the control signal.

The robotic lawn mower system 200 may also optionally or alternatively to the boundary wire 220 comprise at least one beacon 230 to enable the robotic lawn mower to navigate the work area using the beacon navigation sensor(s) 190 as discussed in the above. In an embodiment, where the robotic lawn mower 100 is arranged to navigate or operate according to a virtual map, the boundary wire 220 and the signal generator 215 are optional.

The work area 205 is in this application exemplified as a garden, but can also be other work areas as would be understood. The garden contains a number of features, exemplified herein by a number (3) of trees (T), a compost heap (C), a flower bed (f) and a house structure (H). The trees are marked both with respect to their trunks (filled lines) and the extension of their foliage (dashed lines).

As can be seen in figure 2, the boundary wire 220 has been laid so that so-called islands are formed around the trees' trunks (T) and the house (H) and flower bed (f).

As discussed in the background section, there exists a problem in that a person working in a work area, such as a garden, has to carry a lot of equipment and/or other items that have to be picked up frequently and/or are unsuitable for some means of transport. For example, shearers may need to be picked up and put down repeatedly and at many different places. Also for example, dirt or cut twigs and flowers may have to be collected for later disposal at for example a compost heap and such twigs are not suitable to be carried in the same carrier as the shearers whereby a person has to carry at least two different containers. Similarly any picked fruit would beneficially be carried in a separate container than dirt.

Figure 3A shows a schematic side view of a robotic lawn mower 100, such as the robotic lawn mowers 100 of figures 1A and 1B. The robotic lawn mower 100 is arranged to travel over a surface S, and is configured with an attachment receiver 310 arranged to receive an attachment 320. In the example of figure 3A, the attachment receiver 310 is arranged on the outer shell 140-2 of the robotic lawn mower 100, and more specifically on top of the robotic lawn mower 100. It should be noted though that the attachment receiver 310 may be arranged at other positions on the robotic lawn mower 100, and/or attached to other body parts of the robotic lawn mower 100.

The robotic lawn mower 100 is, in one embodiment, also arranged with an attachment detector 330 and possibly an attachment fastening means 340. In one embodiment, the attachment receiver 310 and the attachment detector 330 is the same component. In one embodiment, the attachment receiver 310 and is the same component. In one embodiment, the attachment detector 330 and the attachment fastening means 340 is the same component. In one embodiment, the attachment receiver 310, the attachment detector 330 and the attachment fastening means 340 is the same component.

The attachment receiver is arranged to receive an attachment, and as the attachment 320 is received, the attachment detector 330 detects that the attachment 320 is received and signals this information to the controller 110 of the robotic lawn mower 100. In one embodiment, the attachment detector 330 is configured to detect the type of the attachment 320 received and signal this information to the controller 110 of the robotic lawn mower 100.

The attachment fastening means 340 are arranged to fasten the attachment 320 to the attachment receiver 310. In one embodiment, the fastening means are mechanical fastening the attachment in place through mechanical force, for example utilizing a snap-and-lock arrangement. In one embodiment, the fastening means are magnetic fastening the attachment in place through magnetic force. The exact configuration of the fastening means depends on the type of attachment, and as would be understood there are many variations and alternatives available.

In one embodiment the type of attachment is arranged to receive (and carry) a load. In one such embodiment the attachment is a container for carrying items or material, such as a bucket (as indicated by the dotted line showing the inner open space of the bucket in figure 3), for example a weed bucket, or such as a tray for collecting leaves in the autumn. In one embodiment, the attachment 320 may be arranged with at least one fastener 320-1 for carrying items or tools 321, such as spades or shearers.

The embodiments where the attachment is a passive attachment (i.e. not arranged to perform an active task), the teachings herein find particular benefit as they fulfil safety standards stating that only one function is to be performed at any given time.

In one embodiment the type of attachment is a second work tool 320. In one such embodiment the attachment, i.e. the second work tool, is a spreader for example for spreading nutrients while mowing and/or spreading seeds while mowing or (if the work tool 160 is a rake) raking.

In another such embodiment the attachment, i.e. the second work tool, is a rake for raking while mowing.

In another such embodiment the attachment, i.e. the second work tool, is a ball collector for collecting for example golf balls while mowing.

In another such embodiment the work tool is a watering arrangement and the attachment, i.e. the second work tool, is a spreader.

As the controller 110 receives information that an attachment 320 has been received, the controller is configured to switch its internal settings or instructions to operate according to an attachment mode. The controller 110 and the robotic lawn mower 100, is thus configured to operate in a lawn mowing mode as well as in an attachment mode.

The operation in the attachment mode may be dependent on which attachment 320 is attached, and in embodiments, where the controller 110 receives information on the type of attachment 320, the controller switches to an appropriate attachment mode, depending on the attachment type.

In one embodiment, the robotic lawn mower 100 is configured to enable a follow-me-mode, when operating in the attachment mode, where the robotic lawn mower 100 follows the operator. In one embodiment the robotic lawn mower is arranged or able to follow the operator by the operator carrying a device that is communicatively coupled to the robotic lawnmower, or which the robotic lawnmower can otherwise sense a range to (for example by sensing an electromagnetic signal being transmitted by the device and sensed by the magnetic sensors 170. Other alternatives for implementing a follow-me-mode are known and a skilled person would understand how to implement such a function.

By enabling the robotic lawn mower 100 to follow the operator, the operator is provided with a garden (or other work) assistant that follows the movements of the operator so that any use of the attachment is always at hand.

In one embodiment, the robotic lawn mower 100 is configured to enable a follow-path-mode, when operating in the attachment mode, where the robotic lawn mower 100 follows a path. In one such embodiment, the robotic lawn mower is configured to follow the path indicated by the boundary of the work area. In one embodiment, the boundary is the boundary as indicated by the boundary wire 220. Details on how the robotic lawn mower is arranged or able to follow the boundary wire 220 are known to a skilled person and will not be discussed in further detail.

In one embodiment, the path may be indicated by a guide wire being arranged in the work area 205. The guide wire operates as the boundary wire, but carries a different control signal 225 so that the robotic lawn mower 100 is able to differentiate between the boundary wire 220 and the guide wire. For the purpose of the teachings herein, no difference will be made between a boundary wire 220 and a guide wire, as they are both wires arranged in the work area and to be sensed by the robotic lawn mower 100.

In one embodiment, the path is a virtual path as indicated by a virtual map. In such an embodiment, the robotic lawn mower is arranged to navigate along the virtual path by receiving a current location from the navigation sensors 190 and comparing it to the stored coordinates for the virtual boundary and navigate accordingly. In one such embodiment, the path is the boundary. In an alternative or additional embodiment, the path is indicated by an operator through a user interface of a remote device. In one embodiment the path is provided by drawing the path in a presentation of a map of the work area in a computer (tablet, smartphone or desktop computer). Alternatively the path is provided by walking the path carrying a device (such as a smartphone or tablet computer arranged to execute an application noting the path and storing it and communicating the path to the robotic lawn mower 100.

The robotic lawn mower 100 is, in one embodiment, configured to follow the path, such as the boundary, until a stop command is given and then stop. The robotic lawn mower 100 is also configured to resume its motion along the boundary when a command to do so is received. The command may be received through a user interface or the communication interface. The command may alternatively or additionally be received through an engagement of the outer shell 140-2 as will be discussed below.

By enabling the robotic lawn mower 100 to follow a path, the operator is provided with a garden (or other work) assistant that is able to move between or to locations along a path for performing tasks. This enables the robotic lawn mower to for example leave the operator, follow the boundary to a dumping location and to for example dump the contents of the container at that location. Possibly, the robotic lawn mower 100 is then configured to return to the operator, or at least to a position along the boundary close to the operator. The location of the operator may be stored (temporarily) in the virtual map). Alternatively, the deduced reckoning sensors 180 and information received through the deduced navigation sensors 180 when navigating away from the operator may be utilized to return to the position, or to a position along the boundary close to the operator by executing the deduced reckoning in reverse.

In one embodiment, the follow-boundary-mode may be initiated or executed by the robotic lawn mower 100 receiving a command. This enables the operator to instruct the robotic lawn mower 100 to go to a specific location. In one embodiment, the follow-boundary-mode may be initiated or executed by the robotic lawn mower 100 determining that the weight of the attachment 320 exceeds a load threshold (more details on determining the weight of the attachment below). This enables the robotic lawn mower 100 to perform a specific task, such as tipping, when it is determined that the weight being carried exceeds a load limit.

In one embodiment, the robotic lawn mower 100 is configured to enable a virtual-navigation-mode, when operating in the attachment mode, where the robotic lawn mower 100 navigates according to a virtual map stored in the memory 120, by receiving a current location from the navigation sensors 190 and comparing it to stored coordinates for the virtual map and navigate accordingly.

By enabling the robotic lawn mower 100 to navigate according to a virtual map, the operator is provided with a garden (or other work) assistant that is able to move between or to locations anywhere in the work area to perform various tasks.

The virtual-map-navigation modes may be initiated by sensor input (such as weight determinations) or by receiving a command to perform a task.

As mentioned above, there are problems associated with simply attaching an attachment to a robotic lawnmower, as some aspects of an attachment may compromise or counteract the operation of the robotic lawnmower. The robotic lawn mower 100 is thus configured to determine an aspect of the attachment 320 and to adapt the operation in the attachment mode to accommodate for the aspect.

One such aspect is that the attachment 320 has a weight that may be subjected to the outer shell 140-2 of the robotic lawn mower 100 (depending on how the attachment receiver 310 is arranged on the robotic lawn mower 100). If the weight is sufficient (which depends on a current design), the weight of the attachment 320 may cause the outer shell 140-2 to move relative the inner hull 140-1. If the weight is substantial (which depends on a current design), the attachment 320 may even cause the outer shell 140-2 to become rigid relative the inner hull 140-1. Alternatively or additionally, the weight may shift the outer shell 140-2 relative the inner hull 140-1. Both these instances, may affect the collision detectors 175 and/or the lift detectors as any relative movement will become difficult or impossible to detect, or it may generate a relative movement that results in a false positive. It can be noted that in the case the surface S being travelled is leaning, the effect of the weight of the attachment 320 may become more pronounced. The robotic lawn mower 100 is thus configured, in some embodiments, to receive or determine at least an indication of the weight of the attachment and adapt accordingly. It should be noted that the weight determination may be done when the attachment is attached, but also during operation with the attachment attached.

Figure 3B shows a schematic side view of a robotic lawn mower 100, such as the robotic lawn mower 100 of figure 3A. In this schematic view, it is illustrated how the container attachment 320 is full and how the weight of the attachment 320 has affected the outer shell 140-2 of the robotic lawn mower 100. This is illustrated in figure 3B by the outer shell 140-2 (and attached components) are shifted or skewed relative the inner hull 140-1 and the surface S.

The inventors have realized that the weight of an attachment 320 has to be taken into account and that the robotic lawn mower 100 must be configured to adapt its general operation when operating in the attachment mode to accommodate for such weight.

The controller 110 is thus configured to operate in the attachment mode in a manner that accounts for the attachment 320.

In one embodiment, the attachment detector means 330 are arranged to detect the weight (or an approximation thereof) of the attachment 320 and signal this to the controller 110 of the robotic lawn mower. In one embodiment, the collision detector 175 is arranged to detect the weight (or an approximation thereof) of the attachment 320 and signal this to the controller 110 of the robotic lawn mower. In one embodiment, the lift detector 176 is arranged to detect the weight (or an approximation thereof) of the attachment 320 and signal this to the controller 110 of the robotic lawn mower.

In one embodiment, the controller 110 is configured to receive an indication of the weight of the robotic lawn mower 100 and determine if the weigh exceeds a weight threshold, and if so, operate in the attachment mode in a manner that accounts for the attachment 320. The weight threshold depends on the actual design and several factors, such as the resiliency of the collision and/or lift detectors, the attachment to the inner hull of the outer shell and/or the inertia of the outer shell 140-2.

In one embodiment, the controller 110 is configured to account for the attachment 320 by adapting the operation of the collision detector 175. The adaptation may be to adapt threshold levels (or other levels) for detecting a collision. The adaptation may be to disengage the collision detector 175.

In one embodiment, the controller 110 is configured to account for the attachment 320 by adapting the operation of the lift detector 176. The adaptation may be to adapt threshold levels (or other levels) for detecting a lift. The adaptation may be to disengage the lift detector 176.

In one embodiment, the controller 110 is configured to account for the type of and/or aspect of the attachment 320 by adapting the driving of the robotic lawn mower 100.

In one embodiment the adaptation may be to travel with larger wheels 130b (in embodiments where the wheels have different diameters) in a forwards direction, taking advantage of larger wheels higher ability to provide grip to or propulsion relative the surface S thereby preventing the robotic lawn mower 100 to get stuck by the smaller wheels 130a getting stuck.

In one embodiment the adaptation may be to travel with larger wheels 130b (in embodiments where the wheels have different diameters) at a lowest position when traversing a slope, taking advantage of larger wheels higher ability to provide sufficient grip to the surface S thereby preventing the robotic lawn mower 100 to slide down the slope.

In one embodiment the adaptation may be to adapt a level of acceptable slope, navigating the robotic lawn mower 100 so that the level of acceptable slope is not exceeded thereby preventing the robotic lawn mower 100 to slide down the slope. The adapted driving may be to not travel a slope in a straight line. Alternatively, the adapted driving may be to enter a slope from a different angle or direction (for example from an opposite direction).

In one embodiment the controller 110 is further configured to receive information form the attachment detector (330) that the attachment (320) is being removed and in response thereto adapt the operation of the robotic lawn mower to the (normal) lawn mower operating mode. In which lawn mower operating mode the robotic lawn mower 100 operates in much the same manner as a contemporary robotic lawn mower 100. In one embodiment, the robotic lawn mower 100 is arranged to receive information from the operator for example via the communication interface 115 to disengage the attachment operation mode and continue operating in the lawn mower operating mode even though the attachment 320 is still in the attachment receiver 310.

As is seen in figures 3A and 3B, the attachment 320 is received in addition to the work tool 160 and is not a replacement for the work tool 160. By enabling the robotic lawn mower 100 to receive an additional attachment (or second work tool) the versatility of the robotic lawn mower (or robotic working tool in general such as watering robots, mulching robots, golf ball collecting robots to mention a few examples) is increased. Furthermore, the handling of the robotic lawn mower 100 becomes much easier and/or safer as the grass cutter 160 need not be accessed at all. Removing and later re-attaching a grass cutter, although simple and easy to many, may not be equally easy for all household users as the inventors of the teachings herein have realized after insightful and inventive thinking. The robotic lawn mower 100 is thus in some embodiments arranged to receive the attachment in addition to the work tool to alleviate the need to access the work tool.

Even though the examples given herein are mainly directed at robotic lawnmowers, it should be noted that the teachings may also be applied to other robotic working tools, such as watering robots, mulching robots, golf ball collecting robots to mention a few examples. To illustrate, a watering robot may also operate as a mulching robot by applying a second work tool being a mulching device, a mulching robot may also operate as a fertilizing robot by applying a second work tool being a fertilizing device, and a golf ball collecting robot may also operate as a lawnmower robot by applying a second work tool being a cutting device or any other combination of mentioned robots and work tools, mentioned herein or otherwise as a skilled person would know about.

The inventors have further realized that there is a problem in that as the robotic lawn mower 100 is automatic, it is difficult for the robotic lawn mower 100 to predict the needs, desires or actions of the operator and act accordingly. Many contemporary robotic lawn mowers have a user interface, for example based on a smartphone, based on a control panel of the robotic lawn mower 100, or based on a control panel of the charging station 210. However, using such user interfaces is difficult and cumbersome when working in an area such as a garden as it requires that the user interface is produced (such as walking over to the charging station or carrying the smart phone) and it requires that the operator is able to engage with the user interface, such as putting down any tools and removing gloves.

The inventors have therefore realized after insightful and inventive reasoning that an alternative command interface may be provided utilizing the collision detector 175 of the robotic lawn mower 100. The inventors have realized that such a collision-based command interface may be provided by adapting the operation of the robotic lawn mower 100 so that a detected collision event is interpreted as a command and not a collision. This enables the operator to engage with the outer shell 140-2 of the robotic lawn mower 100 in order to provide a command to the robotic lawn mower 100. The robotic lawn mower 100 is thus configured to receive a detection of a collision event and to interpret the collision event as a command, or execute a command associated with the detected collision event.

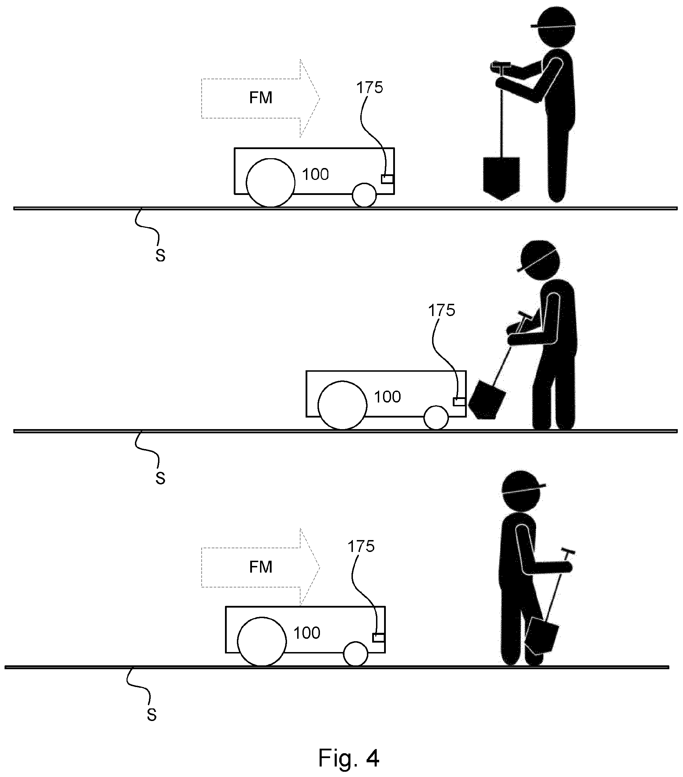

Figure 4 shows a schematic view of a series of events involving a robotic lawn mower 100 and an operator. In the upper scenario the robotic lawn mower 100 is travelling in a forwards motion as indicated by the arrow marked FM. As the robotic lawn mower 100 comes into close range of the operator, the operator may engage the robotic lawn mower 100, for example with a rake, a shovel or other tool, to provide a command. The operator engages the robotic lawn mower 100 so as to generate a collision event which is reinterpreted by the controller of the robotic lawn mower 100 as the intended command. The middle scenario of figure 4, shows how the operator engages the robotic lawn mower 100 with the tool. The engagement may be to affect the outer shell to register a collision event. The collision event is detected by the collision detector 175 and in this embodiment the associated and intended command is a STOP command, whereby the controller 110 causes the robotic lawn mower 100 to stop (which is indicated by no movement arrow being shown for the middle scenario). In the lower scenario of figure 4, the operator has again engaged the robotic lawn mower 100 to generate a collision event associated with an intended command, and in this example the robotic lawn mower 100 has resumed its forwards movement (as indicated by the arrow marked FM), possibly in a follow-me function.

In one example, a detection of forward-collision-event is reinterpreted or recoded as being a first command. The first command may be to stop, in particular if the robotic lawn mower 100 is currently moving. Alternatively, the first command may be to propel forwards and/or to follow the operator), in particular if the robotic lawn mower 100 is currently not moving (i.e. has stopped). The command associated with the detected collision event may thus be dependent on the current operation.

Likewise, a detection of rear-collision-event may be reinterpreted or recoded as being a second command. For example a rear-collision-event may be interpreted as a return to charging station command (or other function).

The operator may thus enabled to for example tap the robotic lawn mower 100 in the front with the operator's foot or a tool (such as a rake) to toggle operation between propelling forwards and stopping). Likewise, the operator may be enabled to for example tap the robotic lawn mower 100 in the rear to cause the robotic lawn mower to return to a tipping location (such as the compost heap). And, all without having to take of any gloves, put down tools or generally interrupt the current work of the operator.

Examples of collision events and associated commands are:
Front collision - TOGGLE STOP/FORWARD
Rear collision - PERFORM COMMAND (such as dumping)

The collision-based command interface may be part of an adaptation of the operating in the attachment mode. The associated command may thus be dependent on the attachment.

The collision-based command interface may also be utilized in the normal operation, i.e. the operation in the lawn mower mode. To enable the robotic lawn mower 100 to still be able to detect normal collisions, the robotic lawn mower should be arranged to detect further collision events, such as a series of events. A collision event, may thus be detected only after a series of sensor event have been detected. For example, a double-front-collision-event (two actuations in series of the forwards collision detector 175) is associated with a stop command in the lawn mower operation mode. This enables the operator to double-tap the robotic lawn mower 100 in front to make it stop (or as discussed above) to continue operation). Another example is where a double-tap provides a stop command, and as the robotic lawn mower 100 has stopped, any collision event is associated with a continue operation command.

Further examples of collision events and associated commands are:
Double front collision - INITIATE SPECIFIC NAVIGATION (such as follow-me-mode)
Double rear collision - RETURN TO CHARGING STATION or other specific location (such as dumping location)
Rear collision when stopped - PROCEED
Front collision when stopped - PREOCEED IN REVERSE
Front collision when stopped - PREOCEED WITH DISENGAGED TOOL (FOR A TIME PERIOD).

The command is thus an operator command to be distinguished from the evasive navigation action that is normally triggered by a collision detector and as discussed in relation to the embodiments of figure 1B, such as reverse, turn and propel away.

It should be noted that as most robotic lawn mowers travel at a relatively constant speed and the constant speed will in most cases result in a collision event of the same amplitude, with variance caused by the direction of the collision. However, the direction of the collision may also be detected through the collision detector 175 and/or through the deduced reckoning sensors, such as an accelerometer 180. As the inventors have realized, the robotic lawn mower will therefore be able, in some embodiments, to differentiate between a real collision event and a collision event generated by an operator based on the amplitude of the collision event.

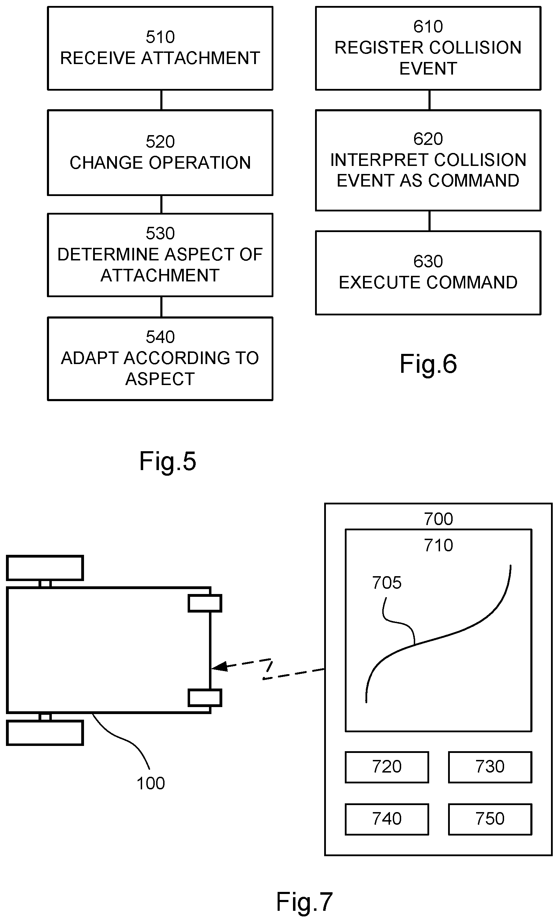

Figure 5 shows a flowchart of a general method according to the teachings herein. A robotic working tool 100 such as a robotic lawn mower comprises a work tool and an attachment receiver 310 arranged to receive an attachment 320 as discussed in the above. The robotic lawnmower is arranged to receive 510 information regarding the attachment 320 being received in the attachment receiver 310. In response thereto the robotic lawn mower 100 changes 520 its operation to operate in an attachment operating mode, being different from the operating without the attachment. The robotic lawn mower 100 also determines 530 an aspect of the attachment 320 and adapts 540 the operation in the attachment operating mode to accommodate for the determined aspect. The aspect is in one embodiment a weight or an indication of a weight of the attachment.

Figure 6 shows a flowchart of a general method according to the teachings herein. A robotic lawn mower (100) comprises at least one collision detector (175), and receives information from the at least one collision detector (175) indicating a collision event, i.e. the robotic lawn mower 100 registers 610 a collision event. The robotic lawn mower 100 interprets 620 the collision event as an operator command associated with the collision event and executes 630 the operator command.

Returning to the manner of providing a virtual path for the robotic lawn mower 100 to follow, figure 7 shows a schematic view of a device 700 comprising a user interface 710, for example a touch screen, and a communication interface 720 for establishing a communications link with the robotic lawn mower 100 to provide the virtual path 705 as is indicated by the dashed arrow in figure 7. The communication interface may be of a same type, or comprise a same type of communication interface as the communication interface 115 of the robotic lawn mower 100.

The device 700 also comprises a controller 730 and a memory 740. The controller 730 may be implemented using instructions that enable hardware functionality, for example, by using executable computer program instructions in a general-purpose or special-purpose processor that may be stored on the memory 740 to be executed by such a processor. The controller 730 is configured to read instructions from the memory 740 and execute these instructions to control the operation of the robotic lawn mower 100 including, but not being limited to, the propulsion of the robotic lawn mower. The controller 730 may be implemented using any suitable, available processor or Programmable Logic Circuit (PLC). The memory 740 may be implemented using any commonly known technology for computer-readable memories such as ROM, RAM, SRAM, DRAM, FLASH, DDR, SDRAM or some other memory technology. The relevant function of the controller 730 is to control the operation of the device to record and transmit the virtual path 705. The relevant function of the memory 740 is to store the virtual path 705.

In one embodiment, the controller 730 is configured to receive input through the user interface 710, for example through a touchscreen, which input indicates the virtual path 705. The virtual path 705 may thus be input in for example a graphical presentation of a map of the work area.

In one embodiment, the device 700 also comprises a navigation sensor 750, such as the navigation sensors discussed above in relation to the robotic lawn mower 100. In one such embodiment, the operator is able to define the virtual path 705 by walking or otherwise move over the work area along the intended path. The controller 730 of the device 730 will receive location data from the navigation sensor 750 and store the location data as a virtual path 705.

In one embodiment, the controller 730 is arranged to display a virtual path 705 and to receive corrections to it through the user interface 710.

In one embodiment, the controller 730 is arranged to receive commands through the user interface 710 and to convey those commands to the robotic lawn mower 100 through the communications interface 720 causing the robotic lawn mower 100 to execute the commands.

## Claims

1. A robotic working tool system (200) comprising a robotic working tool (100) comprising a work tool (160), an attachment receiver (310) arranged to receive an attachment (320) and a controller (110), the controller (110) being configured to
receive information regarding an attachment (320) being received, and in response thereto change the operation of the robotic working tool (100) to operate in an attachment operating mode, and to determine an aspect of the attachment (320) and adapt the operation in the attachment operating mode to accommodate for the determined aspect, the robotic working tool system (200) being **characterized in that** the aspect is an indication of the weight of the attachment (320) and wherein the robotic working tool (100) comprises an outer shell (140-2) and an inner hull (140-1), wherein the attachment receiver is mechanically connected to the outer shell (140-2), and wherein the controller (110) is configured to determine the weight of the attachment (320) based on a relative movement between the outer shell (140-2) and the inner hull (140-1).

2. The robotic working tool system (200) according to claim 1, wherein the robotic working tool (100) further comprises at least one collision detector (175), and wherein the controller (110) is further configured to adapt the operation in the attachment operating mode to accommodate for the determined aspect by adapting the operation of at least one of the at least one collision detector (175).

3. The robotic working tool system (200) according to any preceding claim, wherein the robotic working tool (100) further comprises at least one lift detector (176), and wherein the controller (110) is further configured to adapt the operation in the attachment operating mode to accommodate for the determined aspect by adapting the operation of at least one of the at least one lift detector (176).

4. The robotic working tool system (200) according to any preceding claim, wherein the controller (110) is further configured adapt the operation of the robotic working tool (100) to enable a follow-me-mode.

5. The robotic working tool system (200) according to any preceding claim, wherein the controller (110) is further configured adapt the operation of the robotic working tool (100) to enable a follow-boundary-mode.

6. The robotic working tool system (200) according to any preceding claim, wherein the controller (110) is further configured adapt the operation of the robotic working tool (100) to enable a virtual-map-navigation mode.

7. The robotic working tool system (200) according to any preceding claim, wherein the controller (110) is further configured to adapt the operation to accommodate for the determined aspect by adapting the driving of the robotic working tool (100).

8. The robotic working tool system (200) according to any preceding claim, wherein the controller (110) is further configured to receive information regarding a type of attachment and adapt the operation according to the type of attachment.

9. The robotic working tool system (200) according to claim 8, wherein the type of attachment is a load receiving attachment.

10. The robotic working tool system (200) according to claim 8, wherein the type of attachment is a second work tool.

11. The robotic working tool system (200) according to any of claims 8 to 10, wherein the controller (110) is further configured to adapt the operation to accommodate for the type of attachment (320) by adapting the driving of the robotic working tool (100).

12. The robotic working tool system (200) according to any of claims 7 to 11, wherein the robotic working tool (100) comprises at least one wheel (130a) having a first diameter, and at least one second wheel (130b) having a second diameter wherein the second diameter is larger than the first diameter, and wherein the controller (110) is further configured to adapt the driving of the robotic working tool (100) by causing the robotic working tool (100) to travel with the at least one second wheel (130b) forwards.

13. The robotic working tool system (200) according to any preceding claim, wherein the robotic working tool (100) comprises at least one collision detector (175) when not being dependent on claim 4, and wherein the controller (110) is further configured to receive information from the at least one collision detector (175) and to execute an operator command associated with the information received from the at least one collision detector (175).

14. The robotic working tool system (200) according to claim 13, wherein the controller (110) is further configured to execute the operator command associated with the information received from the at least one collision detector (175) when operating in the attachment operating mode and to execute an evasive navigation action associated with the information received from the at least one collision detector (175) when operating in the working tool operating mode.

15. The robotic working tool system (200) according to any preceding claim, wherein the controller (110) is further configured to
receive information regarding the attachment (320) being removed, and in response thereto adapt the operation of the robotic working tool (100) to operate in a working tool operating mode.

16. The robotic working tool system (200) according to any preceding claim, wherein the attachment receiver (310) is arranged to receive the attachment (320) in addition to the work tool (160).

17. The robotic working tool system (200) according to any preceding claim, wherein the robotic working tool is a robotic lawnmower, and the work tool (160) is a grass cutting device (160).

18. A method for use in a robotic working tool system (200) comprising a robotic working tool (100), comprising a work tool (160) and an attachment receiver (310) arranged to receive an attachment (320) the method comprising:
receiving information regarding an attachment (320) being received, and in response thereto changing the operation of the robotic working tool (100) to operate in an attachment operating mode, and determining an aspect of the attachment (320) and adapting the operation in the attachment operating mode to accommodate for the determined aspect, the method being **characterized in that** the aspect is an indication of the weight of the attachment (320) and wherein the robotic working tool (100) comprises an outer shell (140-2) and an inner hull (140-1), wherein the attachment receiver is mechanically connected to the outer shell (140-2), and wherein the method further comprises determining the weight of the attachment (320) based on a relative movement between the outer shell (140-2) and the inner hull (140-1).

## Patentansprüche

1. Roboterarbeitswerkzeugsystem (200), umfassend ein Roboterarbeitswerkzeug (100), umfassend ein Arbeitswerkzeug (160), eine Aufsatzaufnahme (310), die angeordnet ist, um einen Aufsatz (320) aufzunehmen, und eine Steuerung (110), wobei die Steuerung (110) konfiguriert ist zum
Aufnehmen von Informationen bezüglich eines Aufsatzes (320), die aufgenommen werden, und als Reaktion darauf Ändern des Betriebs des Roboterarbeitswerkzeugs (100), um in einem Aufsatzbetriebsmodus in Betrieb zu sein, und um einen Aspekt des Aufsatzes (320) zu bestimmen und den Betrieb in dem Aufsatzbetriebsmodus anzupassen, um dem bestimmten Aspekt Rechnung zu tragen, wobei das Roboterarbeitswerkzeugsystem (200)
**dadurch gekennzeichnet ist, dass** der Aspekt eine Angabe des Gewichts des Aufsatzes (320) ist und wobei das Roboterarbeitswerkzeug (100) eine Außenhülle (140-2) und eine Innenhülle (140-1) umfasst, wobei die Aufsatzaufnahme mit der Außenhülle (140-2) mechanisch verbunden ist und wobei die Steuerung (110) konfiguriert ist, um das Gewicht des Aufsatzes (320) basierend auf einer Relativbewegung zwischen der Außenhülle (140-2) und der Innenhülle (140-1) zu bestimmen.

2. Roboterarbeitswerkzeugsystem (200) nach Anspruch 1, wobei das Roboterarbeitswerkzeug (100) ferner mindestens einen Kollisionsdetektor (175) umfasst und wobei die Steuerung (110) ferner konfiguriert ist, um den Betrieb im dem Aufsatzbetriebsmodus anzupassen, um dem bestimmten Aspekt Rechnung zu tragen, durch Anpassen des Betriebs mindestens eines des mindestens einen Kollisionsdetektors (175).

3. Roboterarbeitswerkzeugsystem (200) nach einem der vorstehenden Ansprüche, wobei das Roboterarbeitswerkzeug (100) ferner mindestens einen Hubdetektor (176) umfasst und wobei die Steuerung (110) ferner konfiguriert ist, um den Betrieb in dem Aufsatzbetriebsmodus anzupassen, um dem bestimmten Aspekt Rechnung zu tragen, durch Anpassen des Betriebs mindestens eines des mindestens einen Hubdetektors (176).

4. Roboterarbeitswerkzeugsystem (200) nach einem der vorstehenden Ansprüche, wobei die Steuerung (110) ferner konfiguriert ist, um den Betrieb des Roboterarbeitswerkzeugs (100) anzupassen, um einen Folge-mir-Modus zu ermöglichen.

5. Roboterarbeitswerkzeugsystem (200) nach einem der vorstehenden Ansprüche, wobei die Steuerung (110) ferner konfiguriert ist, um den Betrieb des Roboterarbeitswerkzeugs (100) anzupassen, um einen Begrenzungsfolgemodus zu ermöglichen.

6. Roboterarbeitswerkzeugsystem (200) nach einem der vorstehenden Ansprüche, wobei die Steuerung (110) ferner konfiguriert ist, um den Betrieb des Roboterarbeitswerkzeugs (100) anzupassen, um einen Modus einer virtuellen Kartennavigation zu ermöglichen.

7. Roboterarbeitswerkzeugsystem (200) nach einem der vorstehenden Ansprüche, wobei die Steuerung (110) ferner konfiguriert ist, um den Betrieb anzupassen, um dem bestimmten Aspekt Rechnung zu tragen, durch Anpassen des Antriebs des Roboterarbeitswerkzeugs (100).

8. Roboterarbeitswerkzeugsystem (200) nach einem der vorstehenden Ansprüche, wobei die Steuerung (110) ferner konfiguriert ist, um Informationen bezüglich einer Art von Aufsatz aufzunehmen und den Betrieb entsprechend der Art des Aufsatzes anzupassen.

9. Roboterarbeitswerkzeugsystem (200) nach Anspruch 8, wobei die Art von Aufsatz ein Lastaufnahmeaufsatz ist.

10. Roboterarbeitswerkzeugsystem (200) nach Anspruch 8, wobei die Art von Aufsatz ein zweites Arbeitswerkzeug ist.

11. Roboterarbeitswerkzeugsystem (200) nach einem der Ansprüche 8 bis 10, wobei die Steuerung (110) ferner konfiguriert ist, um den Betrieb anzupassen, um der Art von Aufsatz (320) Rechnung zu tragen, durch Anpassen des Antriebs des Roboterarbeitswerkzeugs (100).

12. Roboterarbeitswerkzeugsystem (200) nach einem der Ansprüche 7 bis 11, wobei das Roboterarbeitswerkzeug (100) mindestens ein Rad (130a), das einen ersten Durchmesser aufweist, und mindestens ein zweites Rad (130b), das einen zweiten Durchmesser aufweist, umfasst, wobei der zweite Durchmesser größer ist als der erste Durchmesser, und wobei die Steuerung (110) ferner konfiguriert ist, um den Antrieb des Roboterarbeitswerkzeugs (100) anzupassen, durch Veranlassen des Roboterarbeitswerkzeugs (100), mit dem mindestens einen zweiten Rad (130b) vorwärts zu fahren.

13. Roboterarbeitswerkzeugsystem (200) nach einem der vorstehenden Ansprüche, wobei das Roboterarbeitswerkzeug (100) mindestens einen Kollisionsdetektor (175) umfasst, sofern es nicht von Anspruch 4 abhängig ist, und wobei die Steuerung (110) ferner konfiguriert ist, um Informationen von dem mindestens einen Kollisionsdetektor (175) aufzunehmen und einen Bedienerbefehl auszuführen, der mit den Informationen, die von dem mindestens einen Kollisionsdetektor (175) aufgenommen werden, verknüpft ist.

14. Roboterarbeitswerkzeugsystem (200) nach Anspruch 13, wobei die Steuerung (110) ferner konfiguriert ist, um den Bedienerbefehl auszuführen, der mit den Informationen, die von dem mindestens einen Kollisionsdetektor (175) aufgenommen werden, verknüpft ist, wenn er in dem Aufsatzbetriebsmodus in Betrieb ist, und um eine Ausweichnavigationsaktion auszuführen, die mit den Informationen, die von dem mindestens einen Kollisionsdetektor (175) aufgenommen werden verknüpft ist, wenn er in dem Arbeitswerkzeugbetriebsmodus in Betrieb ist.

15. Roboterarbeitswerkzeugsystem (200) nach einem der vorstehenden Ansprüche, wobei die Steuerung (110) ferner konfiguriert ist zum
Aufnehmen von Informationen bezüglich des zu entfernenden Aufsatzes (320) und als Reaktion darauf Anpassen des Betriebs des Roboterarbeitswerkzeugs (100), um in einem Arbeitswerkzeugbetriebsmodus in Betrieb zu sein.

16. Roboterarbeitswerkzeugsystem (200) nach einem der vorstehenden Ansprüche, wobei die Aufsatzaufnahme (310) angeordnet ist, um den Aufsatz (320) zusätzlich zu dem Arbeitswerkzeug (160) aufzunehmen.

17. Roboterarbeitswerkzeugsystem (200) nach einem der vorstehenden Ansprüche, wobei das Roboterarbeitswerkzeug ein Roboterrasenmäher ist und das Arbeitswerkzeug (160) eine Grasschneidevorrichtung (160) ist.

18. Verfahren zur Verwendung in einem Roboterarbeitswerkzeugsystem (200), umfassend ein Roboterarbeitswerkzeug (100), umfassend ein Arbeitswerkzeug (160) und eine Aufsatzaufnahme (310), die angeordnet ist, um einen Aufsatz (320) aufzunehmen, das Verfahren umfassend:
Aufnehmen von Informationen bezüglich eines Aufsatzes (320), die aufgenommen werden, und als Reaktion darauf Ändern des Betriebs des Roboterarbeitswerkzeugs (100), um in einem Aufsatzbetriebsmodus in Betrieb zu sein, und Bestimmen eines Aspekts des Aufsatzes (320) und Anpassen des Betriebs in dem Aufsatzbetriebsmodus, um dem bestimmten Aspekt Rechnung zu tragen, wobei das Verfahren **dadurch gekennzeichnet ist, dass** der Aspekt eine Angabe des Gewichts des Aufsatzes (320) ist und wobei das Roboterarbeitswerkzeug (100) eine Außenhülle (140-2) und eine Innenhülle (140-1) umfasst, wobei die Aufsatzaufnahme mit der Außenhülle (140-2) mechanisch verbunden ist und wobei das Verfahren ferner das Bestimmen des Gewichts des Aufsatzes (320) basierend auf einer Relativbewegung zwischen der Außenhülle (140-2) und der Innenhülle (140-1) umfasst.

## Revendications

1. Système d'outil de travail robotisé (200) comprenant un outil de travail robotisé (100) comprenant un outil de travail (160), un récepteur d'accessoire (310) conçu pour recevoir un accessoire (320) et un dispositif de commande (110), le dispositif de commande (110) étant configuré pour
recevoir des informations concernant un accessoire (320) étant reçu et, en réponse à cela, modifier le fonctionnement de l'outil de travail robotisé (100) pour qu'il fonctionne dans un mode de fonctionnement d'accessoire, et déterminer un aspect de l'accessoire (320) et adapter le fonctionnement dans le mode de fonctionnement d'accessoire pour tenir compte de l'aspect déterminé, le système d'outil de travail robotisé (200) étant **caractérisé en ce que** l'aspect est une indication du poids de l'accessoire (320) et dans lequel l'outil de travail robotisé (100) comprend une coque extérieure (140-2) et une enveloppe intérieure (140-1), dans lequel le récepteur d'accessoire est mécaniquement relié à la coque extérieure (140-2), et dans lequel le dispositif de commande (110) est configuré pour déterminer le poids de l'accessoire (320) sur la base d'un mouvement relatif entre la coque extérieure (140-2) et l'enveloppe intérieure (140-1).

2. Système d'outil de travail robotisé (200) selon la revendication 1, dans lequel l'outil de travail robotisé (100) comprend en outre au moins un détecteur de collision (175), et dans lequel le dispositif de commande (110) est en outre configuré pour adapter le fonctionnement dans le mode de fonctionnement d'accessoire pour tenir compte de l'aspect déterminé en adaptant le fonctionnement d'au moins un de l'au moins un détecteur de collision (175).

3. Système d'outil de travail robotisé (200) selon l'une quelconque revendication précédente, dans lequel l'outil de travail robotisé (100) comprend en outre au moins un détecteur de levage (176), et dans lequel le dispositif de commande (110) est en outre configuré pour adapter le fonctionnement dans le mode de fonctionnement d'accessoire afin de tenir compte de l'aspect déterminé en adaptant le fonctionnement d'au moins un de l'au moins un détecteur de levage (176).

4. Système d'outil de travail robotisé (200) selon l'une quelconque revendication précédente, dans lequel le dispositif de commande (110) est en outre configuré pour adapter le fonctionnement de l'outil de travail robotisé (100) afin d'activer un mode de suivi.

5. Système d'outil de travail robotisé (200) selon l'une quelconque revendication précédente, dans lequel le dispositif de commande (110) est en outre configuré pour adapter le fonctionnement de l'outil de travail robotisé (100) afin d'activer un mode de suivi de limites.

6. Système d'outil de travail robotisé (200) selon l'une quelconque revendication précédente, dans lequel le dispositif de commande (110) est en outre configuré pour adapter le fonctionnement de l'outil de travail robotisé (100) afin d'activer un mode de navigation par carte virtuelle.

7. Système d'outil de travail robotisé (200) selon l'une quelconque revendication précédente, dans lequel le dispositif de commande (110) est en outre configuré pour adapter le fonctionnement afin de tenir compte de l'aspect déterminé en adaptant l'entraînement de l'outil de travail robotisé (100).

8. Système d'outil de travail robotisé (200) selon l'une quelconque revendication précédente, dans lequel le dispositif de commande (110) est en outre configuré pour recevoir des informations concernant un type d'accessoire et adapter le fonction selon le type d'accessoire.

9. Système d'outil de travail robotisé (200) selon la revendication 8, dans lequel le type d'accessoire est un accessoire de réception de charge.

10. Système d'outil de travail robotisé (200) selon la revendication 8, dans lequel le type d'accessoire est un second outil de travail.

11. Système d'outil de travail robotisé (200) selon l'une quelconque des revendications 8 à 10, dans lequel le dispositif de commande (110) est en outre configuré pour adapter le fonctionnement afin de tenir compte du type d'accessoire (320) en adaptant l'entraînement de l'outil de travail robotisé (100).

12. Système d'outil de travail robotisé (200) selon l'une quelconque des revendications 7 à 11, dans lequel l'outil de travail robotisé (100) comprend au moins une roue (130a) ayant un premier diamètre, et au moins une seconde roue (130b) ayant un second diamètre, dans lequel le second diamètre est plus grand que le premier diamètre, et dans lequel le dispositif de commande (110) est en outre configuré pour adapter l'entraînement de l'outil de travail robotisé (100) en amenant l'outil de travail robotisé (100) à se déplacer avec au moins une seconde roue (130b) vers l'avant.

13. Système d'outil de travail robotisé (200) selon l'une quelconque revendication précédente, dans lequel l'outil de travail robotisé (100) comprend au moins un détecteur de collision (175), lorsqu'il ne dépend pas de la revendication 4, et dans lequel le dispositif de commande (110) est en outre configuré pour recevoir des informations de l'au moins un détecteur de collision (175) et pour exécuter une commande de dispositif de fonctionnement associée aux informations reçues de l'au moins un détecteur de collision (175).

14. Système d'outil de travail robotisé (200) selon la revendication 13, dans lequel le dispositif de commande (110) est en outre configuré pour exécuter la commande de dispositif de fonctionnement associée aux informations reçues de l'au moins un détecteur de collision (175), lorsqu'il fonctionne en mode de fonctionnement d'accessoire et pour exécuter une action de navigation évasive associée aux informations reçues de l'au moins un détecteur de collision (175), lorsqu'il fonctionne en mode de fonctionnement d'outil de travail.

15. Système d'outil de travail robotisé (200) selon l'une quelconque revendication précédente, dans lequel le dispositif de commande (110) est en outre configuré pour
recevoir des informations concernant l'accessoire (320) étant retiré et, en réponse à cela, adapter le fonctionnement de l'outil de travail robotisé (100) pour qu'il fonctionne dans un mode de fonctionnement d'outil de travail.

16. Système d'outil de travail robotisé (200) selon l'une quelconque revendication précédente, dans lequel le récepteur d'accessoire (310) est conçu pour recevoir l'accessoire (320) en plus de l'outil de travail (160).

17. Système d'outil de travail robotisé (200) selon l'une quelconque revendication précédente, dans lequel l'outil de travail robotisé est une tondeuse à gazon robotisée, et l'outil de travail (160) est un dispositif de coupe d'herbe (160).

18. Procédé pour utilisation dans un système d'outil de travail robotisé (200) comprenant un outil de travail robotisé (100), comprenant un outil de travail (160) et un récepteur d'accessoire (310) conçu pour recevoir un accessoire (320), le procédé comprenant :
la réception des informations concernant un accessoire (320) étant reçu, et en réponse à cela, la modification du fonctionnement de l'outil de travail robotisé (100) pour fonctionner dans un mode de fonctionnement d'accessoire, et le fait de déterminer un aspect de l'accessoire (320) et adapter le fonctionnement dans le mode de fonctionnement d'accessoire pour tenir compte de l'aspect déterminé, le procédé étant **caractérisé en ce que** l'aspect est une indication du poids de l'accessoire (320) et dans lequel l'outil de travail robotisé (100) comprend une coque extérieure (140-2) et une enveloppe intérieure (140-1), dans lequel le récepteur d'accessoire est mécaniquement relié à la coque extérieure (140-2), et dans lequel le procédé comprend en outre la détermination du poids de l'accessoire (320) sur la base d'un mouvement relatif entre la coque extérieure (140-2) et l'enveloppe intérieure (140-1).
